Europäisches Patentamt

European Patent Office

Office européen des brevets

(19)

(11) Veröffentlichungsnummer: **0 247 437 B1**

(12) **EUROPÄISCHE PATENTSCHRIFT**

(45) Veröffentlichungstag der Patentschrift: **05.08.92**

(21) Anmeldenummer: **87106929.0**

(22) Anmeldetag: **13.05.87**

(51) Int. Cl.⁵: **A22C 13/00**

---

(54) **Wursthülle mit verbesserter Kaliberkonstanz.**

---

(30) Priorität: **24.05.86 DE 3617500**

(43) Veröffentlichungstag der Anmeldung:
**02.12.87 Patentblatt 87/49**

(45) Bekanntmachung des Hinweises auf die
Patenterteilung:
**05.08.92 Patentblatt 92/32**

(84) Benannte Vertragsstaaten:
**AT BE CH DE FR GB IT LI NL SE**

(56) Entgegenhaltungen:
**EP-A- 0 054 162**
**DE-A- 3 318 906**

(73) Patentinhaber: **HOECHST AKTIENGESELL-
SCHAFT**
**Postfach 80 03 20**
**W-6230 Frankfurt am Main 80(DE)**

(72) Erfinder: **Hammer, Klaus-Dieter, Dr.**
**An der Hasenquelle 25**
**W-6500 Mainz-Mombach(DE)**
Erfinder: **Winter, Hermann**
**Am Schlosspark 93**
**W-6200 Wiesbaden-Biebrich(DE)**
Erfinder: **Büttner, Rolf**
**Taunussteinerstrasse 1**
**W-6274 Hünstetten-Kesselbach(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine schlauchförmige künstliche Wursthülle auf Basis von faserverstärkter Cellulose und ein Verfahren zu ihrer Herstellung. Diese Wursthüllen werden auch als Faserdarm oder Faserstoffhüllen bezeichnet.

Es ist bekannt, Wursthüllen dieser Art vor dem Stopfen mit Wurstmasse vollständig mit Wasser zu sättigen. Hierzu werden die Wursthüllen für etwa 15 bis 30 Minuten in ein Wasserbad gelegt. Der eingeweichte Celluloseschlauch hat dann einen Wassergehalt von 80 bis 120 %, bezogen auf die Cellulose. Dieser Wert wird auch als Quellwert bezeichnet und gibt das maximale Wasserrückhaltevermögen an. Der Feuchtigkeitsgehalt von Cellulosehüllen wird ansonsten immer in Gewichtsprozent bezogen auf das Gesamtgewicht der Hülle angegeben. In die vollständig gewässerte Wursthülle wird Wurstbrät eingepreßt, wobei sich die Wursthülle infolge ihrer erhöhten Flexibilität aufgrund des hohen Wassergehaltes mit nicht allzu hohem Fülldruck um etwa 10 bis 15 % in Umfangsrichtung auf ihr sogenanntes Füllkaliber aufdehnt.

Zur Aufdehnung der Wursthülle ist es erforderlich, ihren Ablauf vom Füllrohr beim Einpressen des Wurstbräts aßzubremsen. Hierzu wird die Hülle am Austritt des Füllrohrs z.B. mit einer Darmbremse zurückgehalten, wodurch eine Rückhaltekraft erzeugt wird. Je größer diese Rückhaltekraft ist, desto stärker steigt der Innendruck in der Wursthülle an und desto größer wird der Außenumfang der Wurst. Es hat sich allgemein in der Praxis gezeigt, daß für die üblichen faserverstärkten Cellulosehüllen in Abhängigkeit von ihrem Kaliber im trockenen Zustand (Feuchtigkeitsgehalt 8-12 %) ein bestimmtes Mindestkaliber beim Füllen optimal ist. Bei Erreichen dieses sogenannten Füllkalibers liegt die Wursthülle an der Wurstmasse eng an. Die erhaltene Wurst Zeigt bei Erreichen des Füllkalibers ein pralles, faltenfreies Aussehen. Das Füllkaliber wird für jede Hüllengröße und Hüllenart vom Hersteller der Hüllen in Tabellen festgelegt und dient dem Verarbeiter als Anhaltspunkt bei der Wurstherstellung. Wird die Hülle nicht bis zum empfohlenen Füllkaliber gefüllt, so zeigt die Wurst ein faltiges Aussehen und einen ungleichmäßigen Querschnitt. Wird die Wursthülle dagegen wesentlich über das Füllkaliber hinaus gefüllt, steigt die Gefahr des Platzens, sowohl beim Füllen als auch beim anschließenden Brühen oder Räuchern.

Um die Wursthülle auf das Füllkaliber aufzudehnen, ist eine bestimmte Rückhaltekraft erforderlich, welche eine Erhöhung des Innendrucks bewirkt. Um ein möglichst gleichbleibendes Kaliber der Wurst zu erhalten, muß die Rückhaltekraft möglichst konstant bleiben, was jedoch häufig nur schwierig zu steuern ist. Es ist deshalb eine wesentliche Aufgabe der Erfindung, einen Weg zu finden, diese Schwankungen des Füllkalibers beim Füllprozess zu verringern.

Diese Rückhaltekraft bzw. der Innendruck, der zum Stopfen der Wursthülle auf ihre volle Größe (Füllkaliber) erforderlich ist, ist bei den modernen automatischen Stopfvorrichtungen auf die üblichen, vollständig eingeweichten Wursthüllen fest eingestellt. Wird nun eine sogenannte "wässerungsfreie" Wursthülle aus faserverstärkter Cellulose verwendet, d.h. eine Hülle, die nicht vollständig eingeweicht ist, so ist die Hülle aufgrund ihres niedrigen Wassergehaltes weniger flexibel. Da das empfohlene Füllkaliber unabhängig davon ist, ob die Wursthülle beim Füllen voll eingeweicht ist oder einen niedrigeren Feuchtigkeitsgehalt zeigt, muß beim Füllen eines wässerungsfreien Hüllentyps zum Erreichen des gleichen Füllkalibers, wie es bei einer vollständig eingeweichten Hülle erreicht wird, ein wesentlich höherer Innendruck gewählt werden, der z.B. nach Angaben der DE-C-27 45 991 bei einem Feuchtigkeitsgehalt von nur 29 bis 42 % doppelt bis dreifach so groß sein muß wie beim Füllen einer vollständig eingeweichten Hülle.

Diese Werte gelten allerdings nur für die bisher üblichen faserverstärkten Celluloseschlauchhüllen, deren Dehnungsverhalten in der DE-C-27 45 991 beschrieben wird. Das Dehnungsverhalten dieser im folgenden als Standardhüllen bezeichneten Wursthüllen zeigt sich auch darin, daß sie nach dem vollständigen Einweichen in Wasser (40-50°C, ca. 30 Min.) in Längsrichtung um 1 bis 2 % und in Querrichtung um 2 bis 3 % schrumpfen.

Die Änderung der Rückhaltekraft an der Füllmaschine bei Wechsel der Wursthüllentypen ist jedoch für den Verarbeiter mit unerwünschtem Arbeitsaufwand verbunden. Außerdem wird mit der Erhöhung der Rückhaltekraft um den zwei- bis dreifachen Wert das Hüllenmaterial stark mechanisch belastet, wodurch die Gefahr des Platzens erhöht wird und mit häufigeren Produktionsunterbrechungen beim Verarbeiter zu rechnen ist.

Eine Absenkung des Innendrucks auf die für voll eingeweichte Hüllen geltenden Werte beim Füllen von wässerungsfreien Cellulosehüllen wäre aber nur möglich, wenn auf eine Kaliberkonstanz verzichtet und auf prall gestopfte Würste kein Wert gelegt wird.

Des weiteren wird in der EP-A-0 054 162 ein Verfahren zur Herstellung von Cellulosehüllen beschrieben, bei dem die Cellulosehydrat-Gel-Bahn in Querrichtung um etwa 5 bis 15 % gestreckt wird und besondere Maßnahmen ergriffen werden, die einen Schrumpf der Bahn in Längsrichtung verhindern bzw. aufheben.

2

Es ist deshalb Aufgabe der Erfindung, die bekannten schlauchförmigen künstlichen Wursthüllen auf Basis von faserverstärkter Cellulose so weiterzubilden, daß die Gleichmäßigkeit des beim Füllprozeß erreichten Füllkalibers verbessert wird, d.h. daß beim Füllen möglicherweise auftretende Innendruckschwankungen möglichst geringe Auswirkungen auf das Füllkaliber zeigen. Insbesondere soll die verbesserte Wursthülle, wenn sie vollständig eingeweicht ist, mit einem niedrigeren Fülldruck auf das gleiche Füllkaliber aufweitbar sein im Vergleich zu den bisherigen vollständig gewässerten Typen.

Eine weitere Aufgabe der Erfindung besteht darin, eine künstliche Wursthülle auf Basis von faserverstärkter Cellulose anzugeben, welche ohne vorheriges Einweichen mit Wurstbrät gestopft werden kann, welche somit wässerungsfrei verarbeitbar ist, bei der es trotz des niedrigen Wassergehaltes des Hüllenmaterials beim Füllvorgang nicht erforderlich ist, die Rückhaltekraft gegenüber den vollständig gewässerten Standardhüllen zu erhöhen, um das übliche Füllkaliber der voll gewässerten Standardhüllen zu erreichen. Eine Veränderung der Maschineneinstellung bei Wechsel dieser Wursthüllentypen würde dann nicht mehr erforderlich.

Schließlich ist es auch Aufgabe der Erfindung, die auf die wässerungsfreie Wursthülle einwirkende mechanische Belastung beim Füllvorgang deutlich zu verringern.

Diese Aufgaben werden gelöst durch die im Anspruch 1 angegebene Wursthülle, die abhängigen Ansprüche 2 bis 5 geben zweckmäßige Weiterbildungen an. Die Aufgabe wird ferner gelöst durch das Verfahren mit den im Anspruch 6 genannten Merkmalen.

Die Wursthülle der Erfindung zeigt ein völlig anderes Dehnverhalten als die üblichen auf dem Markt vorhandenen Faserstoffhüllen. Dies wird durch den im Vergleich zu den Standardhüllen (DE-C-27 45 991) relativ flachen Verlauf der Dehnungskurven deutlich, wie sie in der unten erläuterten Figur dargestellt sind. Ein weiterer wesentlicher Unterschied zu den Standardhüllen besteht darin, daß die Dehnungskurven der erfindungsgemäßen Hülle im voll gewässerten Zustand wie bei einem niedrigen Feuchtigkeitsgehalt (25 Gew.-%) etwa parallel verlaufen, während die Dehnungskurven der bekannten Hüllen mit abnehmendem Feuchtigkeitsgehalt flacher werden. Aus diesem parallelen Steigungsverhalten folgt, daß bei der erfindungsgemäßen Hülle die Kaliberveränderung ($\Delta$ K) bei gleicher Druckveränderung ($\Delta$ p) weitgehend unabhängig davon ist, welcher Feuchtigkeitsgehalt in der Hülle vorhanden ist. Dies gilt für den Druckbereich oberhalb von 20 kPa, der für die Verarbeitung der Wursthüllen von besonderem Interesse ist.

Gegenüber der Standardhülle aus faserverstärkter Cellulose läßt sich das Füllkaliber der Wursthülle nach der Erfindung, wenn sie vor der Verarbeitung voll gewässert wurde, mit wesentlich niedrigerer Rückhaltekraft bzw. niedrigerem Innendruck erreichen, wodurch die mechanische Belastung der Hülle reduziert wird. Bei Schwankungen des Innendrucks resultiert eine nur äußerst geringe Abweichung des Füllkalibers von maximal 0,5 mm, so daß sich eine deutlich verbesserte Kaliberkonstanz ergibt.

Dieses vorteilhafte Dehnungsverhalten wird durch die im Anspruch 1 angegebene Dimensionsänderung nach dem vollständigen Wässern ausgedrückt. Während die Standardhüllen nach dem Wässern in Längsrichtung einen deutlichen Schrumpf zeigen, dehnt sich die Wursthülle im Gegensatz dazu um 0,8 bis 2,5 % aus. Auch in Querrichtung ist ein deutlicher Unterschied zu erkennen. Die Wursthülle nach der Erfindung schrumpft in Querrichtung relativ stark, nämlich um 2,5 bis 5,2 %, während bei der Standardhülle dieser Schrumpf deutlich geringer ist.

Wird die Wursthülle dagegen als "wässerungsfreier" Typ verwendet (Patentanspruch 3), d.h. mit einem Wassergehalt, der weitaus niedriger ist als im voll gewässerten Zustand, welcher sich aber für den Füllvorgang als ausreichend erwiesen hat, so ist eine Erhöhung der Rückhaltekraft auf der Füllvorrichtung nicht erforderlich. Die Wursthülle kann mit dem gleichen Innendruck gestopft werden, wie er bei einer voll gewässerten Standardhülle zum Erreichen des gleichen Füllkalibers erforderlich ist. Es sind somit keine maschinentechnischen Änderungen erforderlich, wenn man bei der Verarbeitung von einer voll gewässerten Standardhülle zu einer wässerungsfreien Hülle nach der Erfindung (Patentanspruch 3) übergeht. Aufgrund des hohen Wassergehaltes des wässerungsfreien Typs besteht während der Lagerung Gefahr, daß die Wursthülle von Schimmelpilzen befallen wird. Es ist deshalb erforderlich, sie mit einem geeigneten fungiciden Mittel zu versehen.

Eine besonders vorteilhafte Ausführungsform der wässerungsfrei verarbeitbaren Wurstbülle ist im Anspruch 3 angegeben. Durch die Innenbeschichtung aus der Kombination der drei Komponenten wird eine deutlich verringerte mechanische Beanspruchung des Hüllenmaterials erzielt, was sich in einer Abnahme von Störungen des Füllvorgangs zeigt. Die Zahl der Ausfälle durch Platzen des Hüllenmaterials oder durch Risse beim Abdrehen der Hülle oder beim Anbringen des Clips wird deutlich verringert.

Das für diese Innenbeschichtung vorgesehene Öl ist insbesondere ein natürliches oder synthetisches Triglyceridgemisch von Fettsäuren mit einer Kohlenstoffkettenlänge im Bereich von 4 bis 14 C-Atomen oder ein Siliconöl. Das wasserunlösliche kationische Harz der Innenbeschichtung ist ein vernetztes, gehärtetes Kondensationsprodukt. Der Überzug aus diesen beiden Komponenten ist in der EP-PS 0 088 308 beschrieben. Zusätzlich zu diesem Stoffgemisch ist in der bevorzugten Überzugsmischung der Erfindung noch ein fungicides Mittel vorhanden.

Geeignete fungicide Mittel für die Außen- bzw. Innenseite der Wursthülle werden beispielsweise in der DE-OS 32 40 847 genannt, wobei die dort beschriebenen Kombinationen aus kationischen Harzen und salzartig gebundenen Sorbinsäureresten bevorzugt eingesetzt werden. Eine andere geeignete Kombination aus kationischem Harz und fungicidem Mittel ist in dem Deutschen Gebrauchsmuster 85 05 880 beschrieben. Diese Kombination besteht aus mit Glyoxal vernetztem Casein und salzartig an dieses kationische Harz gebundenen Sorbinsäureresten. Neben diesen Kombinationen aus kationischem Harz und fungicidem Mittel ist noch die Ölkomponente vorhanden. Gegebenenfalls wird als alleiniges oder zusätzlich fungicides Mittel Glycerinmonolaurat verwendet (vgl. DE-A-33 28 947).

Anstelle dieser Innenbeschichtung können auch andere Kombinationen von Verbindungen eingesetzt werden, um der Hülle besondere Eigenschaften zu verleihen. Es können Beschichtungen verwendet werden, welche die Abschälbarkeit der Hülle von der Wurstmasse erleichtern, welche die Haftung zwischen der Hülle und der Wurstmasse verbessern, welche für Gase undurchlässig sind oder welche das Raffen der Hülle erleichtern.

Die wursthülle wird auf übliche Weise nach dem Viskoseverfahren hergestellt. Hierbei wird eine zu einem Schlauch geformte Papierbahn durch eine ringförmige Spinndüse mit Viskose beschichtet und mit einer sauren Fällflüssigkeit behandelt, welche die Koagulation der Viskose bewirkt. Die regenerierte Cellulose liegt vor dem Trocknen als Cellulosehydrat-Gel vor. Die Glycerinbehandlung wird gewöhnlich durch Hindurchführen der im Gelzustand vorliegenden Hülle durch eine wäßrige Glycerinlösung vorgenommen. Anschließend erfolgt der Trockenprozeß, welcher zu den erfindungswesentlichen Dehn- und Schrumpfeigenschaften der Wursthülle führt.

Beim Durchlaufen des Trockenkanals wird der Schlauch im aufgeblasenen Zustand zwischen zwei angetriebenen Quetschwalzenpaaren geführt, welche sich jeweils am Anfang und am Ende des Trockenkanals befinden. Die Drehgeschwindigkeit des nachfolgenden zweiten Quetschwalzenpaares ist um 2 bis 10, insbesondere 3 bis 6 %, kleiner als die Drehgeschwindigkeit des ersten Quetschwalzenpaares am Eingang des Trockenkanals. Beträgt die Drehgeschwindigkeit des ersten Quetschwalzenpaares beispielsweise 10 m/min, so ist die Umfangsgeschwindigkeit des zweiten Quetschwalzenpaares 9,0 bis 9,8 m/min. Weiterhin muß während des Trockenprozesses ein relativ hoher Innendruck im Schlauchinnern vorhanden sein, welcher zu einer starken radialen Dehnung des Schlauches führt. Der Innendruck wird hierzu so eingestellt, daß die Flachbreite FB des auf einen Feuchtigkeitsgehalt von 8 bis 20 Gew.-%, bezogen auf das Gesamtgewicht, getrockneten, im flachgelegten Zustand aufgewickelten Schlauches, d.h. die sogenannte Trockenflachbreite, in einem bestimmten Verhältnis zum Durchmesser $D_s$ der ringförmigen Spinndüse stehen muß, welches sich aus der folgenden Beziehung ergibt:

$$FB = \frac{D_s \times \pi \times F}{2}$$

Der Faktor F ist eine Größe, welche vom Kaliber der Wursthülle abhängig ist und etwa zwischen 0.95 und 1,05 liegt, wobei die niedrigen Werte für Wursthüllen mit großem Durchmesser, die höheren Werte für Wursthüllen mit kleinerem Durchmesser gelten. So wurde gefunden, daß für Hüllenkalibar von 40 bis 65 mm für den Faktor F ein Wert von etwa 1,03 optimal ist, während bei Hüllenkalibern von 120 mm aufwärts ein Wert von 0.98 bevorzugt wird. Bei Hüllenkalibern im Zwischenbereich wird die Trockenflachbreite so eingestellt, daß F etwa gleich 1,00 ist.

Durch diese spezielle Führung des Trockenprozesses erhält die Schlauchhülle eine starke Querorientierung. Es erfolgt ein starker Schrumpf in Längsrichtung und eine starke radiale Aufdehnung zu einer extrem hohen Flachbreite. Die Materialmenge, die für die radiale Aufdehnung erforderlich ist, wird durch längsaxiales Schrumpfen der Schlauchhülle erhalten.

Der Schlauch zeigt nach dem Trocknen einen Feuchtigkeitsgehalt von etwa 8 bis 12 % und einen Glyceringehalt von etwa 20-24 %, jeweils bezogen auf das Gesamtgewicht. Vor dem Raffen wird der Schlauch auf den für diesen Verarbeitungsschritt optimalen Wassergehalt angefeuchtet, der üblicherweise bei etwa 16 bis 20 % liegt.

Sofern die Wursthülle als wässerungsfreier Typ verwendet werden soll, wird sie auf einen Wassergehalt von 22 bis 27 %, bezogen auf das Gesamtgewicht angefeuchtet. Dieser relativ enge Bereich hat sich für die Wursthülle mit dem erfindungswesentlichen Dehnverhalten als optimal herausgestellt. Eine Veränderung des Glyceringehaltes ist nach dem Trockenprozeß nicht erforderlich. Durch den höheren Wasseranteil sinkt der Glycerinanteil, bezogen auf das Gesamtgewicht der wässerungsfreien Hülle, auf Werte von etwa 17 bis 20 %.

Die Erhöhung des Wassergehaltes auf 22 bis 27 % erfolgt vor oder nach dem Raffen, kann aber auch - beispielsweise durch Besprühen der Innenseite der Hülle durch den Raffdorn - während des Raffens vorgenommen werden.

Zur Innenbeschichtung der Wursthülle wird eine wäßrige Dispersion aus emulgiertem Öl, fungicidem Mittel und noch wasserlöslichem kationischem Harz in das Innere des Schlauches aus Cellulosehydrat-Gel eingebracht. Das kationische Harz wird bei der erhöhten Temperatur des anschließenden Trockenprozesses ausgehärtet. Die Dispersion enthält etwa 1 bis 4 Gew.-% des emulgierten Öls, so daß sich eine Ölauftragsmenge von etwa 150 bis 600 mg/m$^2$ ergibt. Diese Beschichtung ist vor allem für die wässerungsfrei verwendete Wursthülle von großem Vorteil, da sie die mechanische Beanspruchung des Schlauchmaterials noch weiter vermindert und dadurch Störungen beim Füllprozeß verhindert.

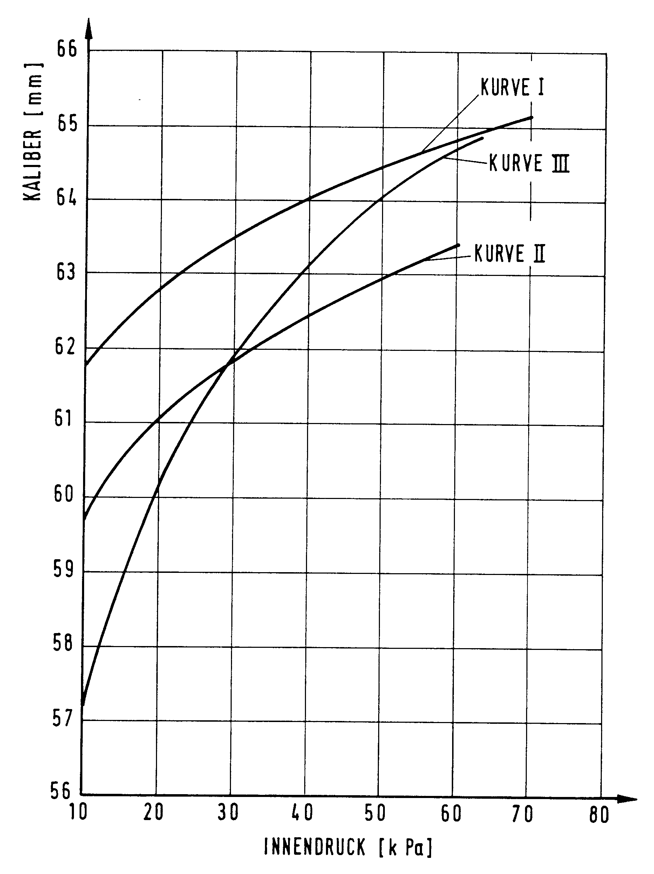

Die Erfindung wird durch die nachfolgenden Beispiele und die Figur näher erläutert:

Beispiel 1

Eine zu einem Schlauch geformte Papierbahn durchläuft eine Spinndüse, wie sie beispielsweise in der DE-PS 19 65 130 beschrieben ist, und wird beidseitig mit Viskose beschichtet. Der Düsendurchmesser beträgt 58,9 mm. Der viskosierte Schlauch wird wie üblich mit Fällflüssigkeit behandelt und die Viskose in Cellulosehydrat-Gel übergeführt. Es folgt die übliche Entschwefelung und das Befreien von überschüssiger Säure und Salzen in Waschbädern. Der Schlauch durchläuft dann ein Bad mit wäßriger Glycerinlösung, wobei er Glycerin aufnimmt. Anschließend wird die Schlauchaußenseite mit einer 3 gew.-%igen Glycerinmonolaurat-Emulsion als fungicidem Mittel präpariert. In einer Schlauchschlaufe befindet sich zur Innenbeschichtung des Schlauches eine wäßrige Lösung mit folgender Zusammensetzung:

| 48,3 l | Wasser |
| 0,3 kg | Kaliumsorbat |
| 6,0 l | Glycerin |
| 5,8 l | Epichlorhydrin-Polyaminpolyamid-Harz als kationisches Harz ( ® Resamin HW 601, 12,5 gew.-%ig in Wasser, Herst. Cassella) |
| 3,6 l | Triglycerid auf Basis von $C_5$- bis $C_{10}$-Fettsäuren als Ölkomponente ( ® Softenol-Emulsion, 50 gew.-%ige Öl/Wasser-Emulsion, Hersteller Dynamit Nobel) |

Nach der Schlauchschlaufe läuft der Schlauch nach oben, wobei überschüssige Lösung an der inneren Schlauchwand nach unten abfließt, und erreicht einen Trockenkanal, in dem er zwischen zwei angetriebenen Quetschwalzenpaaren mit Stützluft aufgeblasen ist. Seine Einlaufgeschwindigkeit zu Beginn des Trockenkanals ist aufgrund der verschiedenen Drehgeschwindigkeiten der Quetschwalzenpaare um 5 % größer als seine Auslaufgeschwindigkeit am Ende des Trockenkanals. Dies führt zu einer Längenrelaxation des Schlauches von 5 %. Die Aufdehnung des Schlauches mit Stützluft erfolgt in dem Maße, daß der auf einen Feuchtigkeitsgehalt von 8 bis 12 % getrocknete, flachgelegte Schlauch eine Trockenflachbreite von 94 bis 96 mm besitzt (Faktor F = 1,03). Der Glyceringehalt beträgt etwa 22 bis 23 Gew.-%. Vor dem Aufwickeln wird der Schlauch durch Besprühen mit Wasser auf einen Feuchtigkeitsgehalt von 18 bis 20 Gew.-%, bezogen auf das Schlauchgesamtgewicht, gebracht. Nach einer halbstündigen Wässerung bei 40°C zeigt eine Schlauchprobe in Längsrichtung eine Dehnung von 1,5 % und in Querrichtung eine Schrumpfung von 3,2 %.

Ein Teil des erhaltenen Schlauchs wird zu einer Raupe mit einer üblichen Raffvorrichtung gerafft. Während des Raffvorgangs wird die Schlauchinnenseite durch den hohlen Raffdorn mit Wasser besprüht, so daß die fertige Raupe eine Endfeuchte von 24 bis 26 Gew.-%, bezogen auf das Gesamtgewicht, besitzt. Ihr Glyceringehalt beträgt infolge des höheren Wasseranteils etwa 18 bis 19 Gew.-%, bezogen auf das Gesamtgewicht. Die Raupe ist ohne weitere Wässerung verarbeitbar. Sie wird auf einer automatischen Füllvorrichtung mit einer Wurstbrätemulsion vom Salamityp gefüllt. Hierbei ist eine Veränderung der den Abzug der Wursthülle vom Füllrohr abbremsenden Einheiten gegenüber voll gewässerten Standardhüllen nicht erforderlich. Die erhaltenen Würste zeigen ein sehr einheitliches Kaliber von 62 bis 62,5 mm.

Beispiel 2

Ein weiterer Teil des in Beispiel 1 erhaltenen Schlauchs wird in gleicher Weise gerafft, wobei jedoch die innere Besprühung durch den Raffdorn entfällt.

Die erhaltene Raupe zeigt einen Feuchtigkeitsgehalt von 18-20 Gew.-%, bezogen auf das Gesamtgewicht. Vor dem Füllvorgang wird die Raupe für eine halbe Stunde in 50°C warmes Wasser gelegt und anschließend auf einer automatischen Füllvorrichtung mit Wurstmasse vom Salamityp gefüllt. Bei gleicher Maschineneinstellung wie in Beispiel 1 zeigen die erhaltenen Würste ein größeres, sehr gleichmäßiges Füllkaliber von 63 bis 64 mm.

Beispiel 3

Es wird analog Beispiel 1 eine faserverstärkte Schlauchhülle aus regenerierter Cellulose hergestellt, wobei die dort vorgenommene Innen- und Außenbeschichtung entfällt. Die Spinndüse zeigt einen Durchmesser von 118,6 mm. Die Aufdehnung des Schlauches beim Trocknen ergibt eine Trokkenflachbreite des flachgelegt aufgewickelten Schlauches von 177 bis 179 mm (Faktor F = 0,96). Die Längenrelaxation beträgt 5 % wie in Beispiel 1. Die Befeuchtung des Schlauches nach dem Trocknen erfolgt wie in Beispiel 1 angegeben. Die Hülle enthält etwa die gleiche Glycerinmenge.

Eine nach dem Trocknen bei ca. 45°C für eine halbe Stunde gewässerte Schlauchprobe zeigt eine längsaxiale Ausdehnung von 2,3 % und einen Schrumpf in Querrichtung von 2,9 %.

Die Schlauchhülle wird gerafft und nach vollständiger Wässerung auf einer automatischen Füllvorrichtung mit Wurstbrät vom Mortadella-Typ gefüllt. Die erhaltenen Würste besitzen ein sehr gleichmäßiges Kaliber von 128,0 bis 128,5 mm.

Beispiel 4

Es wird eine faserverstärkte Schlauchhülle aus regenerierter Cellulose analog Beispiel 1 hergestellt. Sie enthält etwa den gleichen Glycerinanteil. Die Spinndüse hat einen Durchmesser von 63,0 mm. Die Außenseite der Schlauchhülle aus Cellulosehydrat-Gel wird wie in Beispiel 1 mit Glycerinmonolaurat fungicid ausgerüstet, auf die Innenseite wird eine 0,6 gew.-%ige wäßrige Lösung des kationischen Harzes von Beispiel 1 aufgebracht. Die Aufdehnung beim anschließenden Trocknen führt zu einer Trockenflachbreite des Schlauches von 98 bis 100 mm (Faktor F = 1,00). Die Längenrelaxation beträgt 5 % wie in Beispiel 1.

Beim Trockenprozeß wird gleichzeitig die Harzschicht gehärtet und wasserunlöslich. Sie dient als Verankerungsmittel für die noch aufzubringende Barriereschicht.

Vor dem Aufwickeln wird der getrocknete Schlauch auf 10 bis 12 % Feuchte konditioniert. Anschließend erfolgt eine weitere Innenbeschichtung mit der wäßrigen Dispersion eines Vinylidenchlorid-Copolymerisats zur Ausbildung einer wasserdampf- und sauerstoffdichten Barriereschicht, wie es z.B. in der DE-A-30 12 250 beschrieben ist (Beschichtungsgewicht 9 bis 11 g/m$^2$). Beim anschließenden Trocknen zur Entfernung des Dispersionsmittels und Ausbildung der Barriereschicht ist eine entsprechende Aufdehnung des Schlauches erforderlich, um die Trockenflachbreite bei 98 bis 100 mm zu halten. Eine halbstündig bei 40°C gewässerte Schlauchprobe zeigt eine Längenzunahme von 1,3 % und einen Querschrumpf von 3,5 %.

Vor dem Raffen wird der Schlauch durch Besprühen seiner Außenseite mit Wasser auf einen Feuchtigkeitsgehalt von 24 %, bezogen auf sein Gesamtgewicht, gebracht.

Die Raupe kann ohne weitere Wässerung auf automatischen Füllvorrichtungen mit Wurstbrät gefüllt werden. Mit Fleischwurstbrät gefüllte Würste zeigen ein sehr gleichmäßiges Füllkaliber von 64,5 bis 65 mm.

Beispiel 5

Der nach Beispiel 4 hergestellte Schlauch wird mit einem Feuchtigkeitsgehalt von 19 % zu Raupen gerafft. Die Raupen werden vor den Füllen eine halbe Stunde in 50°C warmem Wasser eingeweicht und anschließend auf einer automatischen Füllvorrichtung mit Leberwurstbrät gefüllt. Die erhaltenen Würste zeigen ein sehr gleichmäßiges Füllkaliber von 66,0 bis 66,5 mm.

Die Figur zeigt drei Kurven, wobei die Kaliberzunahme von faserverstärkten Cellulosehüllen in Abhängigkeit vom Innendruck dargestellt ist. Der Innendruck wird durch Einpressen von Luft erzeugt. Die Kurve I zeigt die erfindungsgemäße Hülle im vollgewässerten Zustand, die Kurve II mit einem Feuchtigkeitsgehalt von 25 Gew.-% (wässerungsfreier Typ), jeweils bezogen auf das Hüllengewicht. Kurve III zeigt im Vergleich hierzu das Dehnungsverhalten einer Standardhülle im voll gewässerten Zustand. Die Hüllen haben jeweils ein Ausgangskaliber von 58 mm (Feuchtigkeitsgehalt etwa 10 Gew.-%), das empfohlene Füllkaliber liegt bei etwa 62 mm. Es ist ersichtlich, daß zum Erzielen des geforderten Füllkalibers die erfindungsgemäße wässerungsfreie Hülle (Kurve II) etwa mit dem gleichen Fülldruck gefüllt werden kann wie eine voll gewässerte Standardhülle (Kurve III). Die Kurven I und II zeigen ferner, daß die Zunahme des Füllkalibers bei gleicher Druckänderung vom Feuchtigkeitsgehalt der Hülle praktisch unabhängig ist. Dies gilt für den Druckbereich oberhalb von 20 kPa, in dem das Füllkaliber erreicht wird. Im Bereich unterhalb von 20 kPa ist der Kurvenverlauf für die Hülle mit geringer Feuchtigkeit sogar steiler als bei der Kurve I für die voll eingeweichte Hülle. Ein Vergleich der Kurven I und III zeigt schließlich, daß infolge des flacheren Verlaufs der Kurve I die voll eingeweichte Hülle der Erfindung bei Druckschwankungen geringere Abweichungen im Hüllenkaliber zeigt als die voll eingeweichte Hülle nach dem Stand der Technik. Die Hülle der Kurve I läßt sich infolgedessen mit einem gleichmäßigeren Kaliber mit Wurstmasse stopfen.

Die Feuchtigkeitsgehalte der Wursthülle wurden jeweils durch Titration nach Karl Fischer bestimmt.

## Patentansprüche

1. Schlauchförmige künstliche Wursthülle auf Basis von faserverstärkter Cellulose, dadurch gekennzeichnet, daß sie zur Verbesserung der Kaliberkonstanz beim Füllen mit Wurstbrät nach Wässerung bei etwa 40 bis 50°C über eine Zeitdauer von einer halben Stunde anschließend bei Raumtemperatur gegenüber dem Zustand vor der Wässerung eine Längenzunahme von 0,8 bis 2,5 % und einen Querschrumpf von 2,5 bis 5,2 % zeigt.

2. Wursthülle nach Anspruch 1, dadurch gekennzeichnet, daß ihre Kaliberänderung bei gleicher Druckänderung im Bereich oberhalb von 20 kPa im vollständig gewässerten Zustand und mit 22 bis 27 Gew.-% Feuchtigkeitsgehalt etwa gleich groß ist.

3. Wursthülle nach Anspruch 1 oder 2, dadurch gekennzeichnet, daß sie ohne vorherige Wässerung mit Wurstbrät füllbar ist und hierzu einen Feuchtigkeitsgehalt von 22 bis 27 Gew.-% und einen Glyceringehalt von 17 bis 20 Gew.-%, jeweils bezogen auf das Gesamtgewicht, besitzt und auf ihrer Außenseite ein fungicides Mittel aufweist.

4. Wursthülle nach Anspruch 3, dadurch gekennzeichnet, daß sie auf ihrer Innenseite eine Beschichtung aufweist, welche im wesentlichen aus einem Öl, einem gehärteten wasserunlöslichen kationischen Harz und einem fungiciden Mittel besteht.

5. Wursthülle nach Anspruch 3 oder 4, dadurch gekennzeichnet, daß das fungicide Mittel aus gehärtetem Polyamid-Polyamin-EpichlorhydrinHarz oder aus vernetztem Casein, jeweils mit salzartig gebundenen Sorbinsäureestern, und/oder Glycerinmonolaurat besteht.

6. Verfahren zur Herstellung der Wursthülle nach einem der Ansprüche 1 bis 5, bei dem ein Faserschlauch durch eine kreisringförmige Düse mit Viskose beschichtet und die Viskose in regenerierte Cellulose überführt wird, dadurch gekennzeichnet, daß der aus Cellulosehydrat-Gel bestehende Schlauch beim abschließenden Trockenprozess zwischen zwei angetriebenen Quetschwalzen paaren geführt wird, welche sich jeweils am Anfang und am Ende des Trockenkanals befinden und wobei die Drehgeschwindigkeit des nachfolgenden zweiten Quetschwalzenpaares um 2 bis 10 % kleiner ist, als die Drehgeschwindigkeit des ersten Quetschwalzenpaares am Eingang des Trockenkanals, wodurch der Schlauch um 2 bis 10 % in Längsrichtung schrumpft und die Querdehnung während des Trockenprozesses durch ein im Schlauchinnern eingebrachtes Stützgas erfolgt, so daß die Flachbreite FB des getrockneten Schlauchs in Bezug auf den Düsendurchmesser $D_s$ folgende Bedingung erfüllt:

$$FB = \frac{D_s * \pi * F}{2}$$

(F = 0,95 bis 1,05).

## Claims

1. A tubular artificial sausage casing based on fiber-reinforced cellulose, wherein for improving the uniformity of diameter upon filling with sausage meat after soaking in water at about 40 °C to 50 °C for a period of 30 minutes, the casing which has returned to room temperature shows an increase in length of from 0.8 to 2.5% and a transverse shrinkage of from 2.5 to 5.2%, as compared to its state prior to soaking in water.

2. A sausage casing as claimed in claim 1, wherein the change of diameter at the same change of pressure in the range above 20 kPa is approximately equal for the casing in the completely soaked state and at a moisture content of from 22 to 27% by weight.

3. A sausage casing as claimed in claim 1 or claim 2, wherein the casing can be filled with sausage meat without being previously soaked in water and, for this purpose, has a moisture content of from 22 to 27% by weight and a glycerol content of from 17 to 20% by weight, each based on its total weight, and is provided with a fungicide on its outside surface.

4. A sausage casing as claimed in claim 3, wherein the casing has a coating on its inside surface, which substantially comprises an oil, a cured, water-insoluble cationic resin and a fungicide.

5. A sausage casing as claimed in claim 3 or claim 4, wherein the fungicide comprises a cured polyamidepolyamine-epichlorohydrin resin or crosslinked casein, in each case containing sorbic acid esters bonded by a salt-like linkage, and/or glycerol monolaurate.

6. A process for producing the sausage casing as claimed in any of claims 1 to 5, comprising coating a fiber tube with viscose by means of an annular nozzle and converting the viscose into regenerated cellulose, wherein the tube comprising cellulose hydrate gel, in the final drying process, is guided between two driven pairs of nip rolls which are disposed, in each case, at the inlet and at the outlet of the drying channel, the rotational speed of the downstream, second pair of nip rolls being from 2 to 10 % lower than the rotational speed of the first pair of nip rolls at the inlet of the drying channel, as a result of which the tube shrinks from 2 to 10 % in the longitudinal direction and the transverse expansion during the drying process is effected by a supporting gas introduced into the interior of the tube, such that the flat width FW of the dried tube relative to the nozzle diameter $D_s$ complies with the following requirement:

$$FB = \frac{D_S * \pi * F}{2}$$

(F = 0,95 bis 1,05 ).

## Revendications

1. Enveloppe tubulaire artificielle de saucisse à base de cellulose renforcée par des fibres, caractérisée en ce que, pour améliorer la constance du calibre lors du remplissage avec de la chair à saucisse, après mouillage à environ 40-50°C pendant une demi-heure puis à température ambiante, elle présente un accroissement longitudinal de 0,8 à 2,5 % et un rétrécissement transversal de 2,5 à 5,2 %, par rapport à son état avant mouillage.

2. Enveloppe de saucisse selon la revendication 1, caractérisée en ce que son calibre de remplissage, pour une même variation de pression dans le domaine des pressions supérieures à 20 kPa, est approximativement aussi grand, à l'état intégralement mouillé et avec une teneur en eau de 22 à 27 % en poids.

3. Enveloppe de saucisse selon la revendication 1 ou 2, caractérisée en ce qu'elle est remplissable par de la chair à saucisse sans mouillage préalable et qu'elle possède pour cela une teneur en eau de 22 à 27 % en poids et une teneur en glycérol de 17 à 20 % en poids, chaque fois par rapport à son poids total, et qu'elle est pourvue, sur sa surface externe, d'un fongicide.

4. Enveloppe de saucisse selon la revendication 3, caractérisée en ce qu'elle présente, sur sa surface interne, un revêtement qui se compose essentiellement d'une huile, d'une résine cationique durcie insoluble dans l'eau et d'un agent fongicide.

5. Enveloppe de saucisse selon la revendication 3 ou 4, caractérisée en ce que le fongicide se compose de résine polyamide-polyamine-épichlorhydrine durcie ou de caséine réticulée, chaque fois avec des esters d'acide sorbique liés à elle par une liaison de type sel, et/ou du monolaurate de glycérol.

6. Procédé de fabrication de l'enveloppe de saucisse selon une quelconque des revendications 1 à 5, dans lequel on enduit de viscose un tube souple fibreux, au moyen d'une buse annulaire, et on transforme la viscose en cellulose régénérée, caractérisé en ce qu'on fait passer, lors du séchage final, le tube constitué de gel d'hydrate de cellulose entre deux paires de cylindres presseurs en mouvement, qui se trouvent, l'un à l'entrée et l'autre à la sortie du tunnel de séchage, et en ce que la vitesse de rotation de la seconde paire de cylindres presseurs est de 2 à 10 % inférieure à la vitesse de rotation de la première paire de cylindres à l'entrée du tunnel de séchage, ce qui entraîne une contraction longitudinale du tube de 2 à 10 %, et qu'une dilatation transversale se produit lors du séchage, sous l'effet de l'introduction d'un gaz d'appoint à l'intérieur du tube, de telle sorte que la largeur à plat LP du tube souple sec remplisse la condition suivante par rapport au diamètre $D_s$ de la buse:

$$LP = \frac{D_s \times \pi \times F}{2}$$

(F = 0,95 à 1,05).

9